# EUROPEAN PATENT APPLICATION

(11) **EP 4 651 060 A1**
(43) Date of publication of application: **19.11.2025**
(21) Application number: 25174657.4
(22) Date of filing: 06.05.2025
(51) Int. Cl.: G06Q 30/0241, G06F 40/186, G06F 40/56, G06N 3/08, G06T 11/00

(54) **IMAGE GENERATION METHODS AND APPARATUSES, ELECTRONIC DEVICES, AND STORAGE MEDIA**

(30) Priority: 14.05.2024 CN 202410598841
(71) Applicant: Ant Shengxin (Shanghai) Information Technology Co., Ltd., Huangpu District Shanghai 200010 (CN)
(72) Inventor: BIAN, Zhendong, Shanghai, 200010 (CN)
(74) Representative: Fish & Richardson P.C.

(57) **Abstract**

Embodiments of this specification disclose image generation methods and apparatuses, electronic devices, and storage media. The image generation method includes: determining, based on product information of a product, an image template that corresponds to the product; generating several first elements based on a prompt library by using a pre-accessed text generation model; optimizing prompts in the prompt library by using a pre-accessed content optimization model, to obtain optimized prompts; generating, by using a pre-accessed text-to-image generation model, several second elements that correspond to the optimized prompts; determining, from the several first elements and the several second elements, image materials that correspond to the product information; and performing, by using the image template, synthesis processing on the image materials that correspond to the product information, to obtain a synthesized image. The embodiments of the specification improve quality of the synthesized image and image generation efficiency.

## Description

### TECHNICAL FIELD

One or more embodiments of this specification relate to the field of computer technologies, and in particular, to image generation methods and apparatuses, electronic devices, and storage media.

### BACKGROUND

With popularization of Internet technologies, increasingly more users are used to searching for information in an Internet online manner, to further evaluate or purchase a product. Compared with conventional offline promotion or conventional advertising media such as television, broadcasting, and print media, Internet advertising has low costs, and product organizations can obtain better benefits by placing network advertisements. An Internet advertising marketing mode not only helps increase exposure and sales, but also serves as an important means for organizations to interact with the users and obtain market information. In an Internet advertising environment, a main medium interacted with a user is an image advertisement material. Quality of the image advertisement material affects an advertisement placing effect in many aspects. However, a production process of a current image advertisement material is complex, production efficiency is low, and quality of the image advertisement material is poor.

### SUMMARY

Embodiments of this specification provide image generation methods and apparatuses, electronic devices, and storage media. Technical solutions of the method are as follows:

According to a first aspect, an embodiment of this specification provides an image generation method, including: determining, based on product information of a product, an image template that corresponds to the product; generating several first elements based on a prompt library by using a pre-accessed text generation model; optimizing prompts in the prompt library by using a pre-accessed content optimization model, to obtain optimized prompts; generating, by using a pre-accessed text-to-image generation model, several second elements that correspond to the optimized prompts; determining, from the several first elements and the several second elements, image materials that correspond to the product information; and performing, by using the image template, synthesis processing on the image materials that correspond to the product information, to obtain a synthesized image.

According to a second aspect, an embodiment of this specification provides an image generation apparatus, including: a template determining module, configured to determine, based on product information of a product, an image template that corresponds to the product; a first generation module, configured to generate several first elements based on a prompt library by using a pre-accessed text generation model; an optimization module, configured to optimize prompts in the prompt library by using a pre-accessed content optimization model, to obtain optimized prompts; a second generation module, configured to generate, by using a pre-accessed text-to-image generation model, several second elements that correspond to the optimized prompts; a material determining module, configured to determine, from the several first elements and the several second elements, image materials that correspond to the product information; and an image synthesis module, configured to perform, by using the image template, synthesis processing on the image materials that correspond to the product information, to obtain a synthesized image.

According to a third aspect, an embodiment of this specification provides an electronic device, including a processor and a memory. The processor is connected to the memory. The memory is configured to store executable program code. The processor runs, by reading the executable program code stored in the memory, a program that corresponds to the executable program code, to perform the steps of the image generation method according to the first aspect of the above-mentioned embodiments.

According to a fourth aspect, an embodiment of this specification provides a computer storage medium. The computer storage medium stores a plurality of instructions, and the instructions are applicable to be loaded and executed by a processor, to perform the steps of the image generation method according to the first aspect of the above-mentioned embodiments.

Beneficial effects brought by the technical solutions provided in some embodiments of this specification include at least the following:
In embodiments of this specification, based on product information of a product, an image template that corresponds to the product can be first determined; then several first elements are generated based on a prompt library by using a pre-accessed text generation model; then prompts in the prompt library are optimized by using a pre-accessed content optimization model, to obtain optimized prompts; then several second elements that correspond to the optimized prompts are generated by using a pre-accessed text-to-image generation model; then image materials that correspond to the product information are determined from the several first elements and the several second elements; and synthesis processing is performed, by using the image template, on the image materials that correspond to the product information, to obtain a synthesized image. In embodiments of this description, image element production processes can be separated by using the pre-accessed text generation model, the content optimization model, and the text-to-image generation model, so that each image element is more focused on quality of the element, thereby further improving quality of the synthesized image. In addition, in embodiments of this specification, synthesis processing is performed, by using the image template, on the image materials that correspond to the product information, so that an image production link can be modeled. In embodiments of this specification, independent operation review is performed on production of image elements, so that quality of the synthesized image and image generation efficiency are further improved while compliance and quality of the image elements before image synthesis are ensured.

### BRIEF DESCRIPTION OF DRAWINGS

To describe the technical solutions in embodiments of this specification more clearly, the following briefly describes the accompanying drawings needed in the embodiments. Clearly, the accompanying drawings in the following description show merely some embodiments of this specification, and a person of ordinary skill in the art can still derive other drawings from these accompanying drawings without creative efforts.
FIG. 1 is a schematic diagram illustrating an application scenario of an image generation system, according to this specification;
FIG. 2 is a schematic flowchart illustrating an image generation method, according to this specification;
FIG. 3 is a schematic flowchart illustrating determining an image template set, according to this specification;
FIG. 4 is a schematic flowchart illustrating optimizing prompts in a prompt library, according to this specification;
FIG. 5 is a schematic flowchart illustrating generating several second elements that correspond to optimized prompts, according to this specification;
FIG. 6 is a schematic flowchart illustrating another image generation method, according to this specification;
FIG. 7 is a schematic diagram illustrating an image template that corresponds to a medical insurance product, according to this specification;
FIG. 8 is a schematic diagram illustrating a synthesized medical insurance advertisement image, according to this specification;
FIG. 9 is a schematic structural diagram illustrating an image generation apparatus, according to this specification; and
FIG. 10 is a schematic structural diagram illustrating an electronic device, according to this specification.

### DESCRIPTION OF EMBODIMENTS

The following clearly and comprehensively describes the technical solutions in embodiments of this specification with reference to the accompanying drawings in embodiments of this specification.

The terms "first", "second", etc. in the specification and claims in this specification and the accompanying drawings are used to distinguish between different objects, and are not used to describe a specific sequence. In addition, the term "include" and any variants thereof are intended to cover non-exclusive inclusion. For example, a process, method, system, product, or device that includes a series of steps or units is not limited to the listed steps or units, but optionally further includes unlisted steps or units, or optionally further includes other steps or units inherent to the process, method, product, or device.

A plurality of embodiments of this specification provide an image generation method. The image generation method can be performed by the image generation apparatus provided in embodiments of this application, or a server integrated with the image generation apparatus. The image generation apparatus can be implemented in a hardware or software manner.

Before the technical solutions of this application are described, related technical terms are first briefly explained.

Large language model: A natural language processing technology based on a large-scale pre-training language model that can generate natural language text or understand a meaning of language text. The large language model can be a model such as GPT (Generative Pre-trained Transformer), XLM (Cross-lingual Language Modeling), or mBERT (Multilingual BERT). The large language model can handle various natural language tasks, such as online customer service, information retrieval, content generation, and personalized recommendation. The large language model has a strong language understanding capability and extensive knowledge coverage, with advantages including the strong language understanding capability, the extensive knowledge coverage, a generalization capability and robustness, small sample learning and zero sample learning, a multi-task processing capability, real-time interaction and personalized services, continuous iterations and optimization, and technology innovation and convergence.

Deep learning algorithm: A machine learning technology that processes data, identifies a pattern, and performs a task in a working manner that imitates a human brain. The algorithm includes deep neural networks, which include a plurality of layers, where each of the layers can learn different layers of features in the data. In deep learning, data first enter a neural network through an input layer, then are processed through a series of hidden layers, and finally arrive at an output layer. Each neuron is connected to another neuron to form a complex network structure. Common deep learning algorithms include a convolutional neural network (CNN), a recurrent neural network (RNN), a long-short-term memory network (LSTM), etc.

Text-to-image generation model: An artificial intelligence model, where the text-to-image generation model can generate a corresponding image based on an input text description. This type of model usually converts text into a visually presented image by using a deep learning technology and an architecture such as a generative adversarial network (GAN) or a variational autoencoder (VAE). The text-to-image generation model has processes such as text embedding, image generation, and quality control. Text embedding is converting a text description entered by a user into an embedded vector in a digital form, and the step of text embedding usually involves understanding a meaning and context of text by using a pre-trained language model. Image generation: Text embedding is sent to a generation model, where the model is responsible for generating a corresponding image based on a description of the text, and the generated image can be an image with photo quality, and can display a scenario, an object, a character, or the like that matches the description of the text. Quality control: In an image generation process, a control signal can be applied to ensure that the generated image satisfies specific needs, such as a style, a color, and resolution.

In this specification, before the image generation method is described in detail with reference to one or more embodiments, a scenario in which the image generation method is applied is first described.

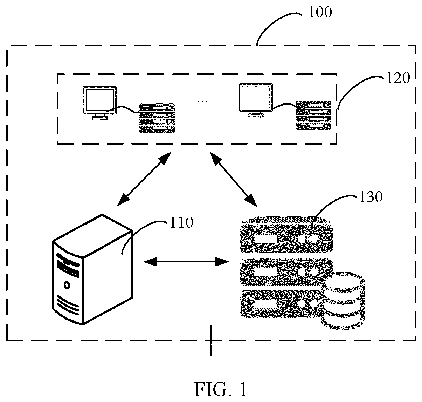

Referring to FIG. 1, FIG. 1 is a schematic diagram illustrating a scenario of an image generation system 100, according to an embodiment of this application. The image generation system 100 can include an image generation apparatus 110, an organization platform 120, a storage server 130, etc. The image generation apparatus 110 is separately communicatively connected to the organization platform 120 and the storage server 130.

In this embodiment, the organization platform 120 can be a platform corresponding to an organization that performs online advertising on a product. The organization platform 120 can be specifically integrated into an electronic device, and the electronic device can be a device such as a server. The server can be a single server, or can be a server cluster including a plurality of servers. The organization platform 120 can send product information of the product to the image generation apparatus 110, and the organization platform 120 can further acquire an advertisement image generated by the image generation apparatus 110, and place the advertisement image generated by the image generation apparatus 110 online, to promote the product to a user.

In this embodiment, the storage server 130 can include an image database, an image template library, a prompt library, an image material library, etc. The image database stores images of different product types. The image template library stores several image templates. The image material library stores several image materials. The storage server 130 can be a physical server or a virtual server. The server can be a single server, or can be a server cluster including a plurality of servers. Database management system software, such as MySQL, SQL Server, and PostgreSQL, can run in the storage server 130. These database management systems allow a user to manage and operate data in a database by using a standard query language (such as SQL).

In this embodiment, the image generation apparatus 110 can be specifically integrated into an electronic device, and the electronic device can be a device such as a terminal or a server. The terminal can be a device such as a mobile phone, a tablet computer, a Bluetooth smartphone device, a notebook computer, or a personal computer (PC). The server can be a single server, or can be a server cluster including a plurality of servers. In some embodiments, the image generation apparatus can be further integrated into a plurality of electronic devices. For example, the image generation apparatus 110 can be integrated into a plurality of servers, and the plurality of servers implement the image generation method in this application.

The image generation apparatus 110 can acquire the product information of the product from the organization platform 120, then determine, based on the product information of the product, an image template that corresponds to the product; generating several first elements based on a prompt library by using a pre-accessed text generation model; optimizing several prompts in the prompt library by using a pre-accessed content optimization model, to obtain several optimized prompts; generating, by using a pre-accessed text-to-image generation model, several second elements that correspond to the several optimized prompts; determining, from the several first elements and the several second elements, image materials that correspond to the product information; and performing, by using the image template, synthesis processing on the image materials that correspond to the product information, to obtain a synthesized image, etc.

It is worthwhile to note that the schematic diagram illustrating the scenario of the image generation system shown in FIG. 1 is merely an example. The image generation system and the scenario described in embodiments of this application are intended to describe the technical solutions of embodiments of this application more clearly, and do not constitute a limitation on the technical solutions provided in embodiments of this application. It can be learned by a person of ordinary skill in the art that, with evolution of the image generation system and emergence of a new scenario, the technical solutions provided in embodiments of this application are also applicable to similar technical problems.

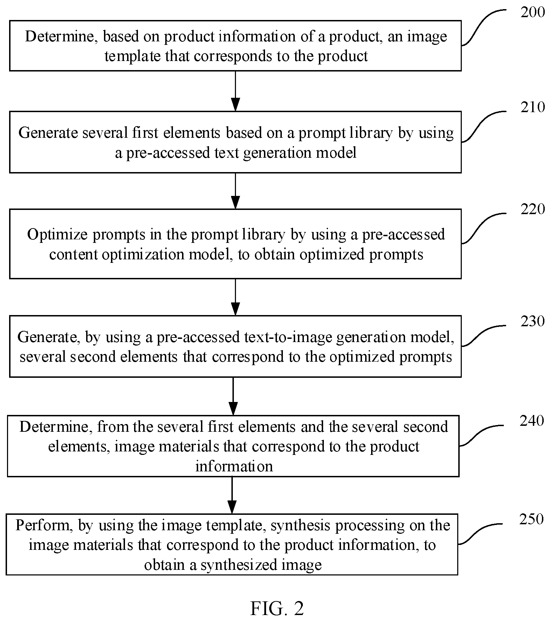

Referring to FIG. 2, FIG. 2 is a schematic flowchart illustrating an image generation method, according to an embodiment of this application. The image generation method can be performed by the image generation apparatus 110 shown in FIG. 1. The image generation method can include at least the following steps.

200. Determine, based on product information of a product, an image template that corresponds to the product.

In this embodiment, the image generation apparatus 110 can first obtain product information of a certain product, and then determine, based on the product information of the product, an image template that corresponds to the product.

The product can be a commodity for which image advertising is to be performed. The product information of the product can be detailed description data related to the product, including but not limited to a function, a feature, use, quality, a price, a manufacturer, a brand, and any relevant service or certificate information of the product.

For example, in the field of food, the product information can include information such as a source of raw materials, a production date, a shelf-life, a nutrition component, and a manufacturer. In the field of electronic products, the product information can include a technical specification, a function description, a use method, warranty information, etc.

In this embodiment, the image template can be a predefined image format or layout, and the image template can include structured data that correspond to an image that satisfies a predetermined quality screening condition. The structured data can include but is not limited to elements such as an overall image layout, fixed information, copywriting, a background image, and an icon.

The overall image layout can be an arrangement and combination manner of various visual elements inside the image, and includes information such as a position, a size, and a relationship between parts on the image. The fixed information can be information that is not changed or not easily changed in the image, for example, data such as an image title, an author, photographing time, and a location. The copywriting can be text information included in the image; The background image can be a background part of the image, and the background image can be an actual image, or can be a pure color background or a background with a pattern. The icon can be a graphical symbol that is in the image and that is used to visually enhance product content or indicate a product function.

In some embodiments, the determining, based on product information of a product, an image template that corresponds to the product includes: determining an image template set; and determining, from the image template set based on the product information, the image template that corresponds to the product.

In this embodiment, the image template set can be a set including image templates that correspond to various types of products.

The image generation apparatus 110 in this embodiment can first acquire the image template set, and then determine, from the image template set based on the product information of the product, the image template that corresponds to the product.

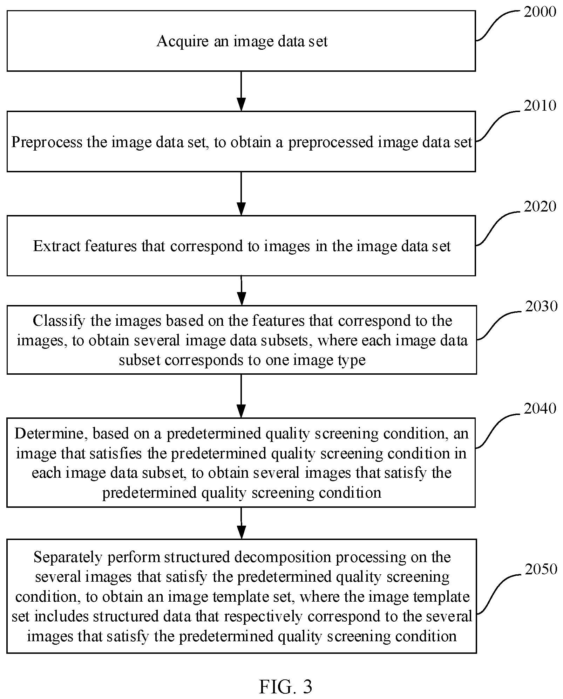

In some embodiments, referring to FIG. 3, FIG. 3 is a schematic flowchart illustrating determining an image template set, according to an embodiment of this application. As shown in FIG. 3, the determining an image template set includes:
2000. Obtain an image data set.
2010. Preprocess the image data set, to obtain a preprocessed image data set.
2020. Extract features that correspond to images in the image data set.
2030. Classify the images based on the features that correspond to the images, to obtain several image data subsets, where each image data subset corresponds to one image type.
2040. Determine, based on a predetermined quality screening condition, an image that satisfies the predetermined quality screening condition in each image data subset, to obtain several images that satisfy the predetermined quality screening condition.
2050. Separately perform structured decomposition processing on the several images that satisfy the predetermined quality screening condition, to obtain the image template set, where the image template set includes structured data that respectively correspond to the several images that satisfy the predetermined quality screening condition.

In this embodiment, the image data set can come from a plurality of channels such as a public image library, a social media, and works of a professional photographer. The predetermined quality screening condition is used for quality of images in the image data subset. The predetermined quality screening condition can include whether predetermined definition is satisfied, whether predetermined image resolution is satisfied, whether a predetermined composition ratio is satisfied, etc.

The image generation apparatus 110 in this embodiment can first obtain an image data set that includes a large amount of image data, and then preprocess the image data set, to obtain a preprocessed image data set. For example, in this embodiment, images in the image data set can be cleaned, to exclude images with low quality and a copyright problem, etc. Next, in this embodiment, key features that correspond to each image in the image data set, such as a color, a texture, a shape, and a subject, can be extracted by using an image recognition and processing technology, such as a deep learning algorithm. In this embodiment, a machine learning algorithm can be used to automatically classify the images based on the features that correspond to the images, to obtain several image data subsets. The machine learning algorithm can be implemented by training an existing classification model, such as a convolutional neural network. Each image data subset corresponds to one image type. For example, in this embodiment, three image data subsets a, b, and c can be obtained. The image data subset a corresponds to a product A, the image data subset b corresponds to a product B, the image data subset c corresponds to a product C. The product A, the product B, and the product C are respectively products of different types.

In this embodiment, the image that satisfies the predetermined quality screening condition in each image data subset can be determined based on the predetermined quality screening condition, to obtain several images that satisfy the predetermined quality screening condition. For example, in this embodiment, an image that satisfies predetermined image definition can be determined in each image data subset based on a predetermined image definition condition, to obtain several images that satisfy the predetermined image definition condition. Then, in this embodiment, structured decomposition processing can be separately performed on the several images that satisfy the predetermined quality screening condition, to obtain the image template set. For example, in this embodiment, the image generation apparatus 110 can first analyze content of an image by using an image recognition technology, identify different objects and elements in the image, then extract the identified objects and elements from a background by using an image processing technology such as threshold segmentation and edge detection, next, can vectorize the extracted objects, further decompose the vectorized objects into smaller, reusable graphic elements such as lines, rectangles, and ellipses, and then, use the graphic elements obtained after the structured decomposition processing as the structured data of the image template.

210. Generate several first elements based on a prompt library by using a pre-accessed text generation model.

In this embodiment, the first element is a text element, and the first element can include a copywriting element, etc. The text generation model can be a model for generating text based on a prompt, the text generation model can be an artificial intelligence model based on a deep learning technology, and the text generation model has a large parameter scale, and can process and generate a natural language. The text generation model can be a model such as GPT, XLM, or mBERT. The text-to-image generation model can be an artificial intelligence model that generates a corresponding image based on an input text description, and the text-to-image generation model can convert text into a visually presented image by using a deep learning technology of an architecture such as a generative adversarial network (GAN) or a variational autoencoder (VAE). Several text-to-image generation models can include a Midjoumey model, a DALLE3 models, etc. In this embodiment, the prompts in the prompt library can be input into the pre-accessed text generation model, to generate several copywriting elements by using the pre-accessed text generation model.

The prompt library in this embodiment can be a database that stores a large quantity of prompts used to generate various types of image materials. The prompt library can include a first prompt set, a second prompt set, a third prompt set, etc. The image material in this embodiment can be an original visual element used in an image generation process. The image material can include a copywriting element, a background element, an icon element, etc. The copywriting element can be text information that needs to be included in a generated image, and the text can be propaganda information, a title, a description, an advertising slogan, etc.

For example, the prompt library can include a first prompt set, etc. The first prompt set can include several prompts used to generate copywriting of different product types. The several prompts used to generate the copywriting of different product types can include prompts for generating scientific and technological product copywriting, generating household article copywriting, generating food copywriting, generating sports article copywriting, etc. The prompts for generating the scientific and technological product copywriting can be intelligence, innovation, high performance, artificial intelligence, ultra-long duration, user-friendly, etc. The prompts for generating the household article copywriting can be comfort, modern design, space saving, durability, sustainability, multi-function, simplicity, practicality, etc. The prompts for generating the food copywriting can be health, delicious, balanced nutrition, low sugar, low fat, high fiber, organic, etc. The prompts for generating the sports article copywriting can be breathable, wear-resistant, lightweight, multi-function, comfortable, fashionable, sports, etc.

For example, the prompt library can include a second prompt set, etc. The second prompt set can include several prompts that are used to generate background images of different product types. The several prompts used to generate the background images of different product types can include prompts for generating a background image of a smartphone, generating a background image of a kitchen electrical appliance, generating a background image of sports equipment, etc. The prompts for generating the background image of the smartphone can include modern sense, metal sense, screen display, thin border, color match, light reflection, etc. The prompts used for generating the background image of the kitchen electrical appliance can include modem household, smooth material, high-temperature baked paint, food-grade security, button feedback, light, quality sense, etc. The prompts for generating the background image of the sports equipment can include dynamic and energetic, breathable material, reflective detail, function and fashion, dynamic composition, etc.

For example, the prompt library can include a third prompt set, etc. The third prompt set can include several prompts used to generate icons of different product types. The several prompts used to generate the icons of different product types can include prompts for generating a smartphone icon, a notebook computer icon, a kitchen appliance icon, a home decoration icon, etc. The prompts for generating the smartphone icon can include signal strength, microphone and headset, camera lens, screen brightness, power percentage, download/upload arrow, etc. The prompts for generating the notebook computer icon can include power plug, network connection, hard disk drive or cloud storage, application icon, user account, enlargement or reduction arrow, etc. The prompts for generating the kitchen appliance icon can include cutter and anvil, oven or microwave oven, coffee maker or teapot, spoon and bowl, etc. The prompts for generating the home decoration icon can include lamp and switch, curtain and sunshade, sofa and bed, bookshelve and ornament, cleaning and maintenance tool, temperature and humidity controller, etc.

In some embodiments, the generating several text elements based on a prompt library by using a pre-accessed text generation model includes: generating, based on the first prompt set by using the pre-accessed text generation model, a text element that corresponds to each prompt in the first prompt set.

In this embodiment, the first prompt set can include several prompts used to generate copywriting of different product types. In this embodiment, a first model response of the pre-accessed text generation model to each prompt in the first prompt set can be acquired based on the text generation model, and the first model response is a copywriting element that corresponds to each prompt in the first prompt set.

220. Prompts in the prompt library are optimized by using a pre-accessed content optimization model, to obtain optimized prompts.

In this embodiment, the content optimization model can be used to optimize each prompt in the second prompt set. The content optimization model can adopt a large language model, and the content optimization model can be a model such as GPT, XLM, or mBERT. The content optimization model can be used to optimize each prompt in the third prompt set, and the content optimization model can be a model such as GPT, XLM, or mBERT.

The content optimization model in this embodiment can be an optimizer of the prompts in the prompt library. After a certain prompt is input, the content optimization model automatically generates a more detailed optimized prompt customized for each text-to-image model generation model. In this way, accuracy of subsequently generating the background element and the icon element is improved.

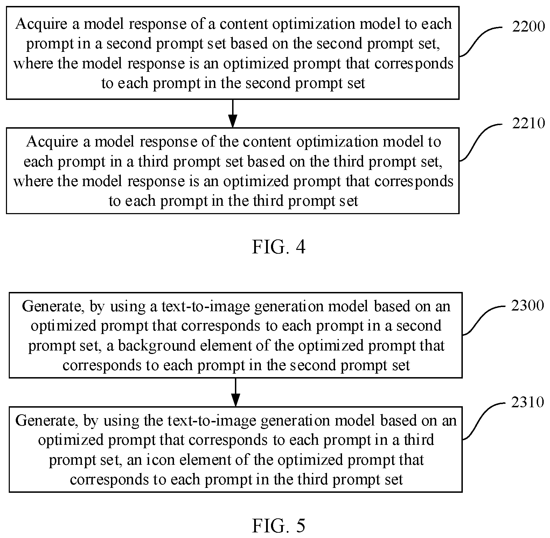

In some embodiments, referring to FIG. 4, FIG. 4 is a schematic flowchart illustrating optimizing prompts in a prompt library, according to an embodiment of this application. As shown in FIG. 4, the optimizing prompts in a prompt library by using a pre-accessed content optimization model, to obtain optimized prompts includes:
2200. Obtain a model response of the content optimization model to each prompt in the second prompt set based on the second prompt set, where the model response is an optimized prompt that corresponds to each prompt in the second prompt set.
2210. Obtain a model response of the content optimization model to each prompt in the third prompt set based on the third prompt set, where the model response is an optimized prompt that corresponds to each prompt in the third prompt set.

In this embodiment, the second prompt set can include several prompts used to generate background images of different product types, and the third prompt set can include several prompts used to generate icons of different product types.

The content optimization model in this embodiment can be an optimizer of each prompt in the second prompt set. After a certain prompt in the second prompt set is input, the content optimization model automatically generates a more detailed optimized prompt customized for each text-to-image generation model. In this way, accuracy of generating the background element is improved.

The content optimization model in this embodiment can further be an optimizer of each prompt in the third prompt set. After a certain prompt in the third prompt set is input, the content optimization model automatically generates a more detailed optimized prompt customized for each text-to-image generation model. In this way, accuracy of generating the icon element is improved.

230. Generate, by using the pre-accessed text-to-image generation model, several second elements that correspond to the optimized prompts.

In this embodiment, the second element is an image element, and the second element can include a background element, an icon element, etc.

For example, in this embodiment, each prompt in the second prompt set can be first optimized by using the pre-accessed content optimization model, and then an optimized prompt that corresponds to each prompt in the second prompt set is input into the text-to-image generation model, so that a background element of the optimized prompt that corresponds to each prompt in the second prompt set is generated by using the text-to-image generation model.

For another example, in this embodiment, each prompt in the third prompt set can be optimized by using the pre-accessed content optimization model, and then an optimized prompt that corresponds to each prompt in the third prompt set is input into several text-to-image generation models, so that an icon element of the optimized prompt that corresponds to each prompt in the third prompt set is generated by using the several text-to-image generation models.

In some embodiments, the second element includes a background element and an icon element. Referring to FIG. 5, FIG. 5 is a schematic flowchart illustrating generating several second elements that correspond to optimized prompts, according to an embodiment of this application. As shown in FIG. 5, the generating, by using the pre-accessed text-to-image generation model, several second elements that correspond to the optimized prompts includes:
2300. Generate, by using the text-to-image generation model based on the optimized prompt that corresponds to each prompt in the second prompt set, a background element of the optimized prompt that corresponds to each prompt in the second prompt set.
2310. Generate, by using the text-to-image generation model based on the optimized prompt that corresponds to each prompt in the third prompt set, an icon element of the optimized prompt that corresponds to each prompt in the third prompt set.

In this embodiment, the background element can be a pattern or a color behind a generated image, and the background element provides a visual frame for the image, and a communication effect of copywriting or an icon can be enhanced. A background can be of a simple single color or a gradient color, or can be a complex pattern, a photo, etc. The icon element can be a graphic symbol in the image, and the icon element can be used to represent a specific concept, function, or object.

In this embodiment, a second model response of the text-to-image generation model to the optimized prompt that corresponds to each prompt in the second prompt set can be acquired based on the text-to-image generation model, and the second model response is a background element that corresponds to each optimized prompt that corresponds to each prompt in the second prompt set. In this embodiment, a third model response of the text-to-image generation model to the optimized prompt that corresponds to each prompt in the third prompt set can be acquired based on the text-to-image generation model, and the third model response is an icon element that corresponds to each optimized prompt that corresponds to each prompt in the third prompt set.

240. Determine, from the several first elements and the several second elements, image materials that correspond to the product information.

In this embodiment, the first element includes a copywriting element, etc., and the second element includes an icon element, a background element, etc. In this embodiment, several copywriting elements, several background elements, and several icon elements can correspond to several image materials, and the several image materials can be image materials that correspond to different types of products. In this embodiment, image materials that correspond to the product information can be determined from the several image materials based on the product information.

In some embodiments, the determining, from the several first elements and the several second elements, image materials that correspond to the product information includes: determining a product type in the product information; and acquiring image materials that satisfy the product type from the several first elements and the several second elements, where the image materials that satisfy the product type are the image materials that correspond to the product information.

In this embodiment, the image generation apparatus 110 can first determine the product type in the product information; and then acquire the image materials that satisfy the product type from the several image materials that correspond to the several first elements and the several second elements.

For example, a product type of a certain product is a smartphone type, and the image generation apparatus 110 in this embodiment can acquire, from several image materials based on the product type of the product, image materials that conform to smartphones. For another example, a product type of a certain product is a sports shoe type, and the image generation apparatus 110 in this embodiment can acquire, from several image materials based on the product type of the product, image materials that conform to sports shoes.

250. Perform, by using the image template, synthesis processing on the image materials that correspond to the product information, to obtain a synthesized image.

In this embodiment, the image generation apparatus 110 can first acquire the image template that corresponds to the product and the image materials that correspond to the product information, and then perform synthesis processing on the image materials that correspond to the product information, to obtain a synthesized image. The synthesized image is an advertisement image generated by the image generation apparatus 110. The image generation apparatus 110 can send the synthesized image to the organization platform 120. The organization platform 120 places the advertisement image generated by the image generation apparatus 110 online, to promote the product to users.

In some embodiments, the performing, by using the image template, synthesis processing on the image materials that correspond to the product information, to obtain a synthesized image includes: performing, by using a pre-accessed image synthesis model, synthesis processing on the image template and the image materials that correspond to the product information, to obtain the synthesized image.

In this embodiment, the image synthesis model can be a model using which different image elements are combined into a complete image. The image synthesis model can be a generative adversarial network (GAN), a variational autoencoder (VAE), a style migration model, a condition generation model, etc. In this embodiment, the image template, the copywriting element, the background element, and the icon element can be synthesized by using the image synthesis model, to obtain the synthesized image.

In another embodiment, the image generation apparatus 110 can further automatically perform, based on Sketch software, synthesis processing on the image template and the image materials that correspond to the product information, to obtain the synthesized image.

In embodiments of the specification, a plurality of elements in the image can be separately generated and finally combined to obtain a final processed image. In particular, prompt optimization processing is first performed for image elements, and subsequent generation is performed by using the text-to-image generation model, so that each image element is more focused on quality of the element, thereby further improving quality of the synthesized image. In embodiments of this description, image element production processes are separated by using the text generation model, the content optimization model, and the text-to-image generation model, so that each image element is more focused on quality of the element, thereby further improving quality of the synthesized image. In addition, in embodiments of this specification, synthesis processing is performed, by using the image template, on the image materials that correspond to the product information, so that an image production link can be modeled. In embodiments of this specification, independent operation review is performed on production of image elements, so that quality of the synthesized image and image generation efficiency are further improved while compliance and quality of the image elements before image synthesis are ensured. In addition, the embodiments of this specification can accumulate production experience in a continuous placed process. For a newly placed product, quality materials can be quickly accumulated to shorten quantity increase time.

According to the method described in the above-mentioned embodiments, the following provides further detailed descriptions by using an example.

In embodiments of this specification, the method in embodiments of this specification is described by using a medical insurance product as an example.

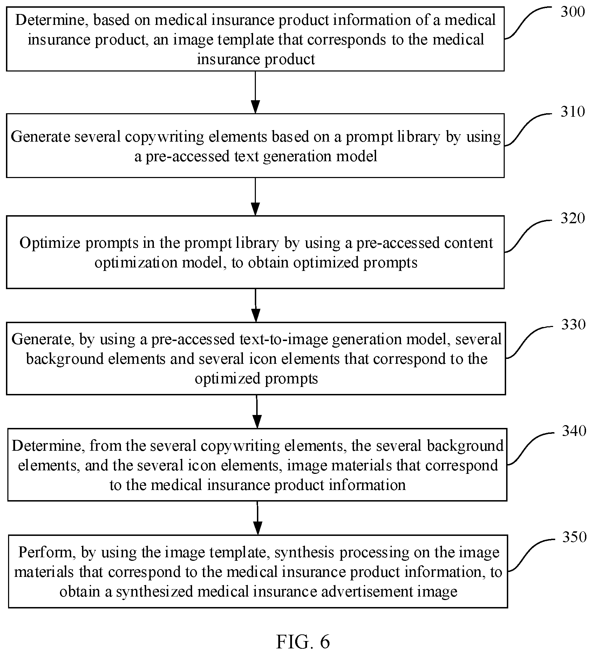

In the embodiments, referring to FIG. 6, FIG. 6 shows a schematic flowchart illustrating another image generation method. As shown in FIG. 6, the image generation method can be performed by the image generation apparatus 110 shown in FIG. 1. A specific process is as follows:
An image generation method includes:
300. Determine, based on medical insurance product information of a medical insurance product, an image template that corresponds to the medical insurance product.

In this embodiment, a medical insurance organization platform sends the medical insurance product information of the medical insurance product to the image generation apparatus 110. The image generation apparatus 110 determines, based on the medical insurance product information of the medical insurance product, the image template that corresponds to the medical insurance product, which can include determining an image template set; and determines, from the image template set based on the medical insurance product information of the medical insurance product, the image template that corresponds to the medical insurance product.

The product information of the medical insurance product can be detailed description data about the medical insurance product, including but not limited to a drug name, a drug category, a medical insurance code, a manufacturer, a medical insurance payment standard, and price information.

In some embodiments, the determining, based on the medical insurance product information of the medical insurance product, the image template that corresponds to the medical insurance product includes: determining the image template set; and determining, from the image template set based on the medical insurance product information of the medical insurance product, the image template that corresponds to the medical insurance product.

In this embodiment, the image template set can be a set including image templates that correspond to various types of products, and the image template set can include the image template that corresponds to the medical insurance product, etc. The image generation apparatus 110 in this embodiment can first acquire the image template set, and then determine, from the image template set based on the medical insurance product information of the medical insurance product, the image template that corresponds to the medical insurance product.

In some embodiments, the determining an image template set includes: acquiring an image data set; preprocessing the image data set, to obtain a preprocessed image data set; extracting features that correspond to images in the image data set; classifying the images based on the features that correspond to the images, to obtain several image data subsets, where each image data subset corresponds to one image type; determining, based on a predetermined quality screening condition, an image that satisfies the predetermined quality screening condition in each image data subset, to obtain several images that satisfy the predetermined quality screening condition; and separately performing structured decomposition processing on the several images that satisfy the predetermined quality screening condition, to obtain the image template set, where the image template set includes structured data that respectively correspond to the several images that satisfy the predetermined quality screening condition.

In this embodiment, the image data set can come from a plurality of channels such as a public image library, a social media, and works of a professional photographer. The predetermined quality screening condition is used for quality of images in the image data subset. The predetermined quality screening condition can include whether predetermined definition is satisfied, whether predetermined image resolution is satisfied, whether a predetermined composition ratio is satisfied, etc.

The image generation apparatus 110 in this embodiment can first acquire an image data set that includes a large amount of image data, then preprocess the image data set, to obtain a preprocessed image data set, and then can determine, based on the predetermined quality screening condition, an image that satisfies the predetermined quality screening condition in each image data subset, to obtain several images that satisfy the predetermined quality screening condition. In this embodiment, structured decomposition processing can be separately performed on the several images that satisfy the predetermined quality screening condition, to obtain the image template set.

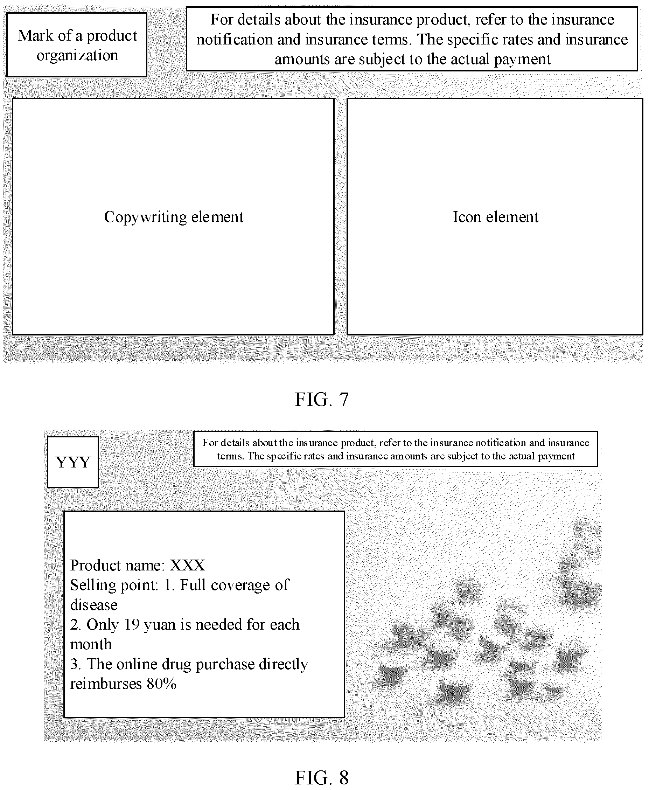

For example, referring to FIG. 7, FIG. 7 is a schematic diagram illustrating an image template that corresponds to a medical insurance product. As shown in FIG. 7, the image template that corresponds to the medical insurance product includes an overall image layout, fixed information, a background image, etc. The overall image layout of the image template that corresponds to the medical insurance product is as follows: A position of a copywriting element is in a left block, a position of an icon element is on a right part, a mark of a product organization is in an upper left corner, and a position of the fixed information is in an upper right corner. The fixed information of the image template that corresponds to the medical insurance product can be prompt information, to be specific, "For details about the insurance product, refer to the insurance notification and insurance terms. The specific rates and insurance amounts are subject to the actual payment", of the medical insurance organization platform. The background image of the image template that corresponds to the medical insurance product can be gray.

310. Generate several copywriting elements based on a prompt library by using a pre-accessed text generation model.

In this embodiment, the prompt library can include a first prompt set, a second prompt set, and a third prompt set. The first prompt set includes several prompts used to generate copywriting of different medical insurance product types, the second prompt set includes several prompts used to generate background images of different medical insurance product types, and the third prompt set includes several prompts used to generate icons of different medical insurance product types.

In some embodiments, the generating several text elements based on a prompt library by using a pre-accessed text generation model includes: generating, based on the first prompt set by using the pre-accessed text generation model, a text element that corresponds to each prompt in the first prompt set.

In this embodiment, a first model response of the pre-accessed text generation model to each prompt in the first prompt set can be acquired based on the text generation model, and the first model response is a copywriting element that corresponds to each prompt in the first prompt set.

320. Optimize prompts in the prompt library by using a pre-accessed content optimization model, to obtain optimized prompts.

In this embodiment, the optimizing prompts in the prompt library by using a pre-accessed content optimization model, to obtain optimized prompts includes: acquiring a model response of the content optimization model to each prompt in the second prompt set based on the second prompt set, where the model response is an optimized prompt that corresponds to each prompt in the second prompt set; and acquiring a model response of the content optimization model to each prompt in the third prompt set based on the third prompt set, where the model response is an optimized prompt that corresponds to each prompt in the third prompt set.

330. Generate, by using a pre-accessed text-to-image generation model, several background elements and several icon elements that correspond to the optimized prompts.

In this embodiment, the generating, by using a pre-accessed text-to-image generation model, several background elements and several icon elements that correspond to the optimized prompts includes: generating, by using the text-to-image generation model based on the optimized prompt that corresponds to each prompt in the second prompt set, a background element of the optimized prompt that corresponds to each prompt in the second prompt set; and generating, by using the text-to-image generation model based on the optimized prompt that corresponds to each prompt in the third prompt set, an icon element of the optimized prompt that corresponds to each prompt in the third prompt set.

340. Determine, from the several copywriting elements, the several background elements, and the several icon elements, image materials that correspond to the medical insurance product information.

In this embodiment, the determining, from several copywriting elements, several background elements, and several icon elements, image materials that correspond to medical insurance product information can include: determining a medical insurance product type in the medical insurance product information; and then acquiring image materials that conform to the medical insurance product type from the several copywriting elements, the several background elements, and the several icon elements, and the image materials that conform to the medical insurance product type are the image materials that correspond to the medical insurance product information.

The image materials that correspond to the medical insurance product information can include a copywriting element that corresponds to the medical insurance product information, a background that corresponds to the medical insurance product information, an icon element that corresponds to the medical insurance product information, etc.

350. Perform, by using the image template, synthesis processing on the image materials that correspond to the medical insurance product information, to obtain a synthesized medical insurance advertisement image.

In this embodiment, the performing, by using the image template, synthesis processing on the image materials that correspond to the medical insurance product information, to obtain a synthesized image can include: performing, by using a pre-accessed image synthesis model, synthesis processing on the image template and the image materials that correspond to the medical insurance product information, to obtain the synthesized medical insurance advertisement image.

The image synthesis model can be a model using which different image elements are combined into a complete image. The image synthesis model can be a generative adversarial network (GAN), a variational autoencoder (VAE), a style migration model, a condition generation model, etc. In this embodiment, the image template, the copywriting element, the background element, and the icon element can be synthesized by using the image synthesis model, to obtain the synthesized medical insurance advertisement image.

For example, referring to FIG. 8, FIG. 8 is a schematic diagram illustrating a synthesized medical insurance advertisement image. As shown in FIG. 8, an identifier YYY of a medical insurance organization is in an upper right corner of the synthesized medical insurance advertisement image, where the identifier YYY of the medical insurance organization can be a number, a letter, and/or an image, etc. A copywriting element of the synthesized medical insurance advertisement image is "Product name: XXX; Selling point: 1. Full coverage of disease; 2. Only 19 yuan is needed for each month; 3. The online drug purchase directly reimburses 80%". An icon element is on the right of the synthesized medical insurance advertisement image. In FIG. 8, the icon element includes several scattered pharmaceutical particles, and the icon element can reflect a visual effect of a product quite intuitively. A background element of the synthesized medical insurance advertisement image can be of light blue, or can be of another color.

In embodiments of the specification, a plurality of elements in the image can be separately generated and finally combined to obtain a final processed image. In particular, prompt optimization processing is first performed for image elements, and subsequent generation is performed by using the text-to-image generation model, so that each image element is more focused on quality of the element, thereby further improving quality of the synthesized image. In embodiments of this description, image element production processes are separated by using the text generation model, the content optimization model, and the text-to-image generation model, so that each image element is more focused on quality of the element, thereby further improving quality of the synthesized image. In addition, in embodiments of this specification, synthesis processing is performed, by using the image template, on the image materials that correspond to the product information, so that an image production link can be modeled. In embodiments of this specification, independent operation review is performed on production of image elements, so that quality of the synthesized image and image generation efficiency are further improved while compliance and quality of the image elements before image synthesis are ensured. In addition, the embodiments of this specification can accumulate production experience in a continuous placed process. For a newly placed product, quality materials can be quickly accumulated to shorten quantity increase time.

Specific embodiments of this specification are described above. Other embodiments fall within the scope of the appended claims. In some cases, the actions or steps described in the claims can be performed in a sequence different from that in the embodiments, and a desired result can still be implemented. In addition, the process depicted in the accompanying drawings does not necessarily require a particular sequence or a sequential sequence shown to achieve the desired result. In some implementations, multi-tasking and concurrent processing are feasible or may be advantageous.

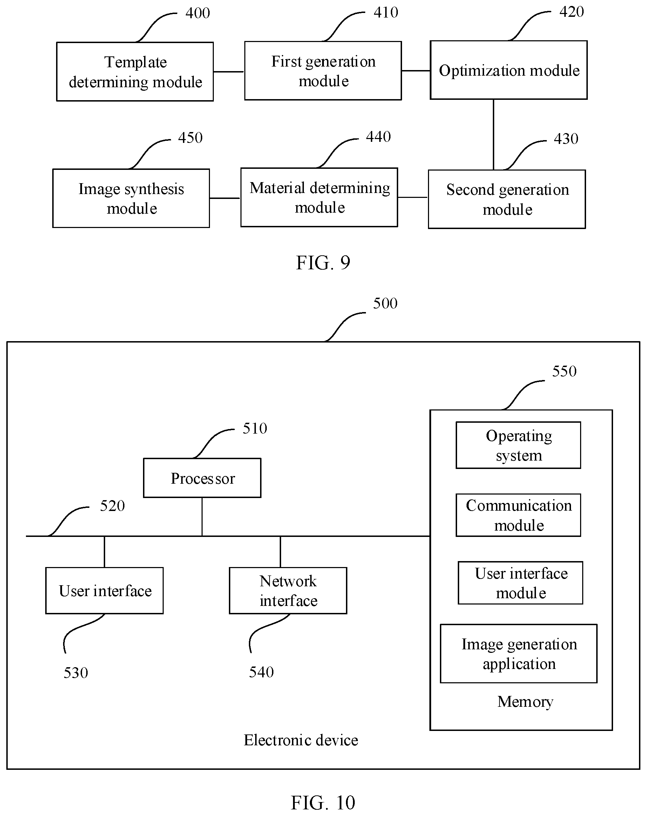

Referring to FIG. 9, FIG. 9 is a schematic structural diagram illustrating an image generation apparatus, according to an embodiment of this specification.

As shown in FIG. 9, the image generation apparatus can include at least a template determining module 400, a first generation module 410, an optimization module 420, a second generation module 430, a material determining module 440, and an image synthesis module 450.

The template determining module 400 is configured to determine, based on product information of a product, an image template that corresponds to the product.

The first generation module 410 is configured to generate several first elements based on a prompt library by using a pre-accessed text generation model.

The optimization module 420 is configured to optimize prompts in the prompt library by using a pre-accessed content optimization model, to obtain optimized prompts.

The second generation module 430 is configured to generate, by using a pre-accessed text-to-image generation model, several second elements that correspond to the optimized prompts.

The material determining module 440 is configured to determine, from the several first elements and the several second elements, image materials that correspond to the product information.

The image synthesis module 450 is configured to perform, by using the image template, synthesis processing on the image materials that correspond to the product information, to obtain a synthesized image.

In some embodiments, the template determining module includes a template set determining module and a template selection module. The template set determining module is configured to determine an image template set. The template selection module is configured to determine, from the image template set based on the product information of the product, the image template that corresponds to the product.

In some embodiments, the template set determining module includes an image set acquisition module, a preprocessing module, a feature extraction module, a classification module, an image screening module, and a structured decomposition module. The image set acquisition module is configured to acquire an image data set. The preprocessing module is configured to preprocess the image data set, to obtain a preprocessed image data set. The feature extraction module is configured to extract features that correspond to images in the image data set. The classification module is configured to classify the images based on the features that correspond to the images, to obtain several image data subsets, where each image data subset corresponds to one image type. The image screening module is configured to determine, based on a predetermined quality screening condition, an image that satisfies the predetermined quality screening condition in each image data subset, to obtain several images that satisfy the predetermined quality screening condition. The structured decomposition module is configured to separately perform structured decomposition processing on the several images that satisfy the predetermined quality screening condition, to obtain the image template set, where the image template set includes structured data that respectively correspond to the several images that satisfy the predetermined quality screening condition.

In some embodiments, the prompt library includes a first prompt set, a second prompt set, and a third prompt set. The first prompt set includes several prompts used to generate copywriting of different product types, the second prompt set includes several prompts used to generate background images of different product types, and the third prompt set includes several prompts used to generate icons of different product types.

In some embodiments, the first element is a copywriting element, and the first generation module includes a copywriting generation module. The copywriting generation module is configured to generate, based on the first prompt set by using the pre-accessed text generation model, copywriting elements that respectively correspond to prompts in the first prompt set.

In some embodiments, the optimization module includes a first optimization module and a second optimization module. The first optimization module is configured to acquire a model response of the content optimization model to each prompt in the second prompt set based on the second prompt set, where the model response is an optimized prompt that corresponds to each prompt in the second prompt set. The second optimization module is configured to obtain a model response of the content optimization model to each prompt in the third prompt set based on the third prompt set, where the model response is an optimized prompt that corresponds to each prompt in the third prompt set.

In some embodiments, the second element includes a background element and an icon element, the second generation module further includes a background generation module and an icon generation module. The background generation module is configured to generate, by using the text-to-image generation model based on the optimized prompt that corresponds to each prompt in the second prompt set, a background element that corresponds to each prompt in the second prompt set. The icon generation module is configured to generate, by using the text-to-image generation model based on the optimized prompt that corresponds to each prompt in the third prompt set, an icon element of the optimized prompt that corresponds to each prompt in the third prompt set.

In some embodiments, the material determining module includes a type determining module and a material acquisition module. The type determining module is configured to determine a product type in the product information. The material acquisition module is configured to acquire, from the several first elements and the several second elements, image materials that conform to the product type, where the image materials that conform to the product type are the image materials that correspond to the product information.

In some embodiments, the image synthesis module includes a synthesis submodule. The synthesis submodule is configured to perform, by using a pre-accessed image synthesis model, synthesis processing on the image template and the image materials that correspond to the product information, to obtain a synthesized image.

Based on content of the image generation system in a plurality of embodiments of this specification, it can be learned that, in embodiments of this specification, image element production processes can be separated by using the text generation model, the content optimization model, and the text-to-image generation model, so that each image element is more focused on quality of the element, thereby further improving quality of the synthesized image. In addition, in embodiments of this specification, synthesis processing is performed, by using the image template, on the image materials that correspond to the product information, so that an image production link can be modeled. In embodiments of this specification, independent operation review is performed on production of image elements, so that quality of the synthesized image and image generation efficiency are further improved while compliance and quality of the image elements before image synthesis are ensured. In addition, the embodiments of this specification can accumulate production experience in a continuous placed process. For a newly placed product, quality materials can be quickly accumulated to shorten quantity increase time.

All the embodiments of this specification are described in a progressive manner. For same or similar parts in the embodiments, references can be made to each other. Each embodiment focuses on a difference from another embodiment. Particularly, the image generation system embodiments are basically similar to the image generation method embodiments, and therefore are described briefly. For related parts, references can be made to some descriptions in the method embodiments.

FIG. 10 is a schematic structural diagram illustrating an electronic device, according to an embodiment of this specification.

As shown in FIG. 10, the electronic device 500 can include at least one processor 510, at least one network interface 540, a user interface 530, a memory 550, and at least one communication bus 520.

The communication bus 520 can be configured to implement connection and communication between the above-mentioned components.

The user interface 530 can include a key, and an optional user interface can further include a standard wired interface and a wireless interface.

The network interface 540 can be but is not limited to a Bluetooth module, an NFC module, a Wi-Fi module, etc.

The processor 510 can include one or more processing cores. The processor 510 is connected to all parts of the entire electronic device 500 by using various interfaces and lines, and executes various functions of the electronic device 500 and processes data by running or executing instructions, a program, a code set, or an instruction set stored in the memory 550 and invoking data stored in the memory 550. Optionally, the processor 510 can be implemented in at least one hardware form of a DSP, an FPGA, and a PLA. The processor 510 can integrate one or a combination of a CPU, a GPU, a modem, etc. The CPU mainly deals with an operating system, a user interface, an application, etc. The GPU is responsible for rendering and drawing content that needs to be displayed on a display. The modem is used to deal with wireless communication It can be appreciated that the modem can be separately implemented by using one chip without being integrated into the processor 510.

The memory 550 can include a RAM, or can include a ROM. Optionally, the memory 550 includes a non-transitory computer-readable medium. The memory 550 can be configured to store instructions, a program, code, a code set, or an instruction set. The memory 550 can include a program storage area and a data storage area. The program storage area can store instructions used to implement an operating system, instructions used to implement at least one function (for example, a touch function, a sound play function, an image play function), instructions used to implement the above-mentioned method embodiments, etc. The data storage area can store data involved in the above-mentioned method embodiments, etc. Optionally, the memory 550 can further be at least one storage apparatus located far away from the above-mentioned processor 510. As a computer storage medium, the memory 550 can include an operating system, a network communication module, a user interface module, and an image generation application. The processor 510 can be configured to invoke the image generation application stored in the memory 550, and perform the step of generating the image mentioned in the above-mentioned embodiments.

An embodiment of this specification further provides a computer-readable storage medium. The computer-readable storage medium stores instructions. When the instructions run on a computer or a processor, the computer or the processor is enabled to perform one or more steps in the above-mentioned embodiments shown in FIG. 2 to FIG. 8. When each component module of the above-mentioned electronic device is implemented in a form of a software functional unit and sold or used as an independent product, the components can be stored in the computer-readable storage medium.

All or a part of the above-mentioned embodiments can be implemented by software, hardware, firmware, or any combination thereof. When software is used to implement the embodiments, all or a part of the embodiments can be implemented in a form of a computer program product. The computer program product includes one or more computer instructions. When computer program instructions are loaded and executed on a computer, a procedure or a function according to embodiments of this specification is completely or partially generated. The computer can be a general-purpose computer, a dedicated computer, a computer network, or other programmable apparatuses. Computer instructions can be stored in the computer-readable storage medium, or transmitted by using the computer-readable storage medium. The computer instructions can be transmitted from a website site, computer, server or data center to another website site, computer, server or data center in a wired (for example, coaxial cable, optical fiber, or digital subscriber line (DSL)) or wireless (for example, infrared, wireless, or microwave) manner. The computer-readable storage medium can be any usable medium accessible by the computer, or a data storage device, such as a server or a data center, integrating one or more usable media. The available medium can be a magnetic medium (for example, a floppy disk, a hard disk drive, or a magnetic tape), an optical medium (for example, a digital versatile disc (DVD)), or a semiconductor medium (for example, a solid state drive (SSD)).

A person of ordinary skill in the art can understand that all or some of the procedures of the method in the embodiments can be implemented by a computer program instructing related hardware. The program can be stored in a computer-readable storage medium. When the program is executed, the procedures of the method embodiments are performed. The storage medium includes any medium that can store program code, such as a ROM, a RAM, a magnetic disk, or an optical disc. The technical features in the embodiments and the implementation solutions can be randomly combined if they do not conflict with each other.

The above-mentioned embodiments are merely described in a preferred embodiment manner of this specification, but are not intended to limit the scope of this specification. Without departing from the design spirit of this specification, various modifications and improvements made by a person of ordinary skill in the art to the technical solutions of this specification fall within the protection scope determined in the claims of this specification.

### EXAMPLES

1. An image generation method, comprising:
   determining, based on product information of a product, an image template that corresponds to the product;
   generating several first elements based on a prompt library by using a pre-accessed text generation model;
   optimizing prompts in the prompt library by using a pre-accessed content optimization model, to obtain optimized prompts;
   generating, by using a pre-accessed text-to-image generation model, several second elements that correspond to the optimized prompts;
   determining, from the several first elements and the several second elements, image materials that correspond to the product information; and
   performing, by using the image template, synthesis processing on the image materials that correspond to the product information, to obtain a synthesized image.
2. The method according to example 1, wherein the determining, based on product information of a product, an image template that corresponds to the product comprises:
   determining an image template set; and
   determining, from the image template set based on the product information of the product, the image template that corresponds to the product.
3. The method according to example 2, wherein the determining an image template set comprises:
   acquiring an image data set;
   preprocessing the image data set, to obtain a preprocessed image data set;
   extracting features that correspond to images in the image data set;
   classifying the images based on the features that correspond to the images, to obtain several image data subsets, wherein each image data subset corresponds to one image type;
   determining, based on a predetermined quality screening condition, an image that satisfies the predetermined quality screening condition in each image data subset, to obtain several images that satisfy the predetermined quality screening condition; and
   separately performing structured decomposition processing on the several images that satisfy the predetermined quality screening condition, to obtain the image template set, wherein the image template set comprises structured data that respectively correspond to the several images that satisfy the predetermined quality screening condition.
4. The method according to example 1, wherein the prompt library comprises a first prompt set, a second prompt set, and a third prompt set, the first prompt set comprises several prompts used to generate copywriting of different product types, the second prompt set comprises several prompts used to generate background images of different product types, and the third prompt set comprises several prompts used to generate icons of different product types.
5. The method according to example 4, wherein the first element is a copywriting element, and the generating several first elements based on a prompt library by using a pre-accessed text generation model comprises:
   generating, based on the first prompt set by using the pre-accessed text generation model, copywriting elements that respectively correspond to prompts in the first prompt set.
6. The method according to example 5, wherein the optimizing prompts in the prompt library by using a pre-accessed content optimization model, to obtain optimized prompts comprises:
   acquiring a model response of the content optimization model to each prompt in the second prompt set based on the second prompt set, wherein the model response is an optimized prompt that corresponds to each prompt in the second prompt set; and
   acquiring a model response of the content optimization model to each prompt in the third prompt set based on the third prompt set, wherein the model response is an optimized prompt that corresponds to each prompt in the third prompt set.
7. The method according to example 6, wherein the second element comprises a background element and an icon element, and the generating, by using a pre-accessed text-to-image generation model, several second elements that correspond to the optimized prompts comprises:
   generating, by using the text-to-image generation model based on the optimized prompt that corresponds to each prompt in the second prompt set, a background element of the optimized prompt that corresponds to each prompt in the second prompt set; and
   generating, by using the text-to-image generation model based on the optimized prompt that corresponds to each prompt in the third prompt set, an icon element of the optimized prompt that corresponds to each prompt in the third prompt set.
8. The method according to example 1, wherein the determining, from the several first elements and the several second elements, image materials that correspond to the product information comprises:
   determining a product type in the product information; and
   acquiring, from the several first elements and the several second elements, image materials that conform to the product type, wherein the image materials that conform to the product type are the image materials that correspond to the product information.
9. The method according to example 1, wherein the performing, by using the image template, synthesis processing on the image materials that correspond to the product information, to obtain a synthesized image comprises:
   performing, by using a pre-accessed image synthesis model, synthesis processing on the image template and the image materials that correspond to the product information, to obtain a synthesized image.
10. An image generation apparatus, comprising:
   a template determining module, configured to determine, based on product information of a product, an image template that corresponds to the product;
   a first generation module, configured to generate several first elements based on a prompt library by using a pre-accessed text generation model;
   an optimization module, configured to optimize prompts in the prompt library by using a pre-accessed content optimization model, to obtain optimized prompts;
   a second generation module, configured to generate, by using a pre-accessed text-to-image generation model, several second elements that correspond to the optimized prompts;
   a material determining module, configured to determine, from the several first elements and the several second elements, image materials that correspond to the product information; and
   an image synthesis module, configured to perform, by using the image template, synthesis processing on the image materials that correspond to the product information, to obtain a synthesized image.
11. The apparatus according to example 10, wherein the template determining module comprises:
   a template set determining module, configured to determine an image template set; and
   a template selection module, configured to determine, from the image template set based on the product information of the product, the image template that corresponds to the product.
12. The apparatus according to example 11, wherein the template set determining module comprises:
   an image set acquisition module, configured to acquire an image data set;
   a preprocessing module, configured to preprocess the image data set, to obtain a preprocessed image data set;
   a feature extraction module, configured to extract features that correspond to images in the image data set;
   a classification module, configured to classify the images based on the features that correspond to the images, to obtain several image data subsets, wherein each image data subset corresponds to one image type;
   an image screening module, configured to determine, based on a predetermined quality screening condition, an image that satisfies the predetermined quality screening condition in each image data subset, to obtain several images that satisfy the predetermined quality screening condition; and
   a structured decomposition module, configured to separately perform structured decomposition processing on the several images that satisfy the predetermined quality screening condition, to obtain the image template set, wherein the image template set comprises structured data that respectively correspond to the several images that satisfy the predetermined quality screening condition.
13. The apparatus according to example 10, wherein the prompt library comprises a first prompt set, a second prompt set, and a third prompt set, the first prompt set comprises several prompts used to generate copywriting of different product types, the second prompt set comprises several prompts used to generate background images of different product types, and the third prompt set comprises several prompts used to generate icons of different product types.
14. The apparatus according to example 13, wherein the first element is a copywriting element, and the first generation module comprises:
   a copywriting generation module, configured to generate, based on the first prompt set by using the pre-accessed text generation model, copywriting elements that respectively correspond to prompts in the first prompt set.
15. The apparatus according to example 14, wherein the optimization module comprises:
   a first optimization module, configured to acquire a model response of the content optimization model to each prompt in the second prompt set based on the second prompt set, wherein the model response is an optimized prompt that corresponds to each prompt in the second prompt set; and
   a second optimization module, configured to acquire a model response of the content optimization model to each prompt in the third prompt set based on the third prompt set, wherein the model response is an optimized prompt that corresponds to each prompt in the third prompt set.
16. The apparatus according to example 15, wherein the second element comprises a background element and an icon element, and the second generation module further comprises:
   a background generation module, configured to generate, by using the text-to-image generation model based on the optimized prompt that corresponds to each prompt in the second prompt set, a background element of the optimized prompt that corresponds to each prompt in the second prompt set; and
   an icon generation module, configured to generate, by using the text-to-image generation model based on the optimized prompt that corresponds to each prompt in the third prompt set, an icon element of the optimized prompt that corresponds to each prompt in the third prompt set.
17. The apparatus according to example 10, wherein the material determining module comprises:
   a type determining module, configured to determine a product type in the product information; and
   a material acquisition module, configured to acquire, from the several first elements and the several second elements, image materials that conform to the product type, wherein the image materials that conform to the product type are the image materials that correspond to the product information.
18. The apparatus according to example 10, wherein the image synthesis module comprises:
   a synthesis submodule, configured to perform, by using a pre-accessed image synthesis model, synthesis processing on the image template and the image materials that correspond to the product information, to obtain a synthesized image.
19. An electronic device, comprising a processor and a memory, wherein
   the processor is connected to the memory; and
   the memory is configured to store executable program code, wherein
   the processor runs, by reading the executable program code stored in the memory, a program that corresponds to the executable program code, to perform the method according to any one of examples 1 to 9.
20. A computer-readable storage medium, storing a computer program, wherein when the computer program is executed by a processor, the method according to any one of examples 1 to 9 is implemented.

## Claims

1. An method for image generation, the method comprising:
determining, based on product information of a product, an image template that corresponds to the product;
generating several first elements based on a prompt library by using a pre-accessed text generation model;
optimizing prompts in the prompt library by using a pre-accessed content optimization model, to obtain optimized prompts;
generating, by using a pre-accessed text-to-image generation model, several second elements that correspond to the optimized prompts;
determining, from the several first elements and the several second elements, image materials that correspond to the product information; and
performing, by using the image template, synthesis processing on the image materials that correspond to the product information, to obtain a synthesized image.

2. The method according to claim 1, wherein determining, based on product information of a product, an image template that corresponds to the product comprises:
determining an image template set; and
determining, from the image template set based on the product information of the product, the image template that corresponds to the product; optionally
wherein determining an image template set comprises:
acquiring an image data set;
preprocessing the image data set, to obtain a preprocessed image data set;
extracting features that correspond to images in the image data set;
classifying the images based on the features that correspond to the images, to obtain several image data subsets, wherein each image data subset corresponds to one image type;
determining, based on a predetermined quality screening condition, an image that satisfies the predetermined quality screening condition in each image data subset, to obtain several images that satisfy the predetermined quality screening condition; and
separately performing structured decomposition processing on the several images that satisfy the predetermined quality screening condition, to obtain the image template set, wherein the image template set comprises structured data that respectively correspond to the several images that satisfy the predetermined quality screening condition.

3. The method according to any one of claims 1 or 2, wherein the prompt library comprises a first prompt set, a second prompt set, and a third prompt set, the first prompt set comprises several prompts used to generate copywriting of different product types, the second prompt set comprises several prompts used to generate background images of different product types, and the third prompt set comprises several prompts used to generate icons of different product types.

4. The method according to claim 3, wherein the first element is a copywriting element, and generating several first elements based on a prompt library by using a pre-accessed text generation model comprises:
generating, based on the first prompt set by using the pre-accessed text generation model, copywriting elements that respectively correspond to prompts in the first prompt set.

5. The method according to claim 4, wherein optimizing prompts in the prompt library by using a pre-accessed content optimization model, to obtain optimized prompts comprises:
acquiring a model response of the content optimization model to each prompt in the second prompt set based on the second prompt set, wherein the model response is an optimized prompt that corresponds to each prompt in the second prompt set; and
acquiring a model response of the content optimization model to each prompt in the third prompt set based on the third prompt set, wherein the model response is an optimized prompt that corresponds to each prompt in the third prompt set; optionally
wherein the second element comprises a background element and an icon element, and generating, by using a pre-accessed text-to-image generation model, several second elements that correspond to the optimized prompts comprises:
generating, by using the text-to-image generation model based on the optimized prompt that corresponds to each prompt in the second prompt set, a background element of the optimized prompt that corresponds to each prompt in the second prompt set; and
generating, by using the text-to-image generation model based on the optimized prompt that corresponds to each prompt in the third prompt set, an icon element of the optimized prompt that corresponds to each prompt in the third prompt set.

6. The method according to any one of claims 1 to 5, wherein determining, from the several first elements and the several second elements, image materials that correspond to the product information comprises:
determining a product type in the product information; and
acquiring, from the several first elements and the several second elements, image materials that conform to the product type, wherein the image materials that conform to the product type are the image materials that correspond to the product information.

7. The method according to any one of claims 1 to 6, wherein performing, by using the image template, synthesis processing on the image materials that correspond to the product information, to obtain a synthesized image comprises:
performing, by using a pre-accessed image synthesis model, synthesis processing on the image template and the image materials that correspond to the product information, to obtain a synthesized image.

8. An apparatus for image generation, comprising:
a template determining module, configured to determine, based on product information of a product, an image template that corresponds to the product;
a first generation module, configured to generate several first elements based on a prompt library by using a pre-accessed text generation model;
an optimization module, configured to optimize prompts in the prompt library by using a pre-accessed content optimization model, to obtain optimized prompts;
a second generation module, configured to generate, by using a pre-accessed text-to-image generation model, several second elements that correspond to the optimized prompts;
a material determining module, configured to determine, from the several first elements and the several second elements, image materials that correspond to the product information; and
an image synthesis module, configured to perform, by using the image template, synthesis processing on the image materials that correspond to the product information, to obtain a synthesized image.

9. The apparatus according to claim 8, wherein the template determining module comprises:
a template set determining module, configured to determine an image template set; and
a template selection module, configured to determine, from the image template set based on the product information of the product, the image template that corresponds to the product; optionally
wherein the template set determining module comprises:
an image set acquisition module, configured to acquire an image data set;
a preprocessing module, configured to preprocess the image data set, to obtain a preprocessed image data set;
a feature extraction module, configured to extract features that correspond to images in the image data set;
a classification module, configured to classify the images based on the features that correspond to the images, to obtain several image data subsets, wherein each image data subset corresponds to one image type;
an image screening module, configured to determine, based on a predetermined quality screening condition, an image that satisfies the predetermined quality screening condition in each image data subset, to obtain several images that satisfy the predetermined quality screening condition; and
a structured decomposition module, configured to separately perform structured decomposition processing on the several images that satisfy the predetermined quality screening condition, to obtain the image template set, wherein the image template set comprises structured data that respectively correspond to the several images that satisfy the predetermined quality screening condition.

10. The apparatus according to any one of claims 8 or 9, wherein the prompt library comprises a first prompt set, a second prompt set, and a third prompt set, the first prompt set comprises several prompts used to generate copywriting of different product types, the second prompt set comprises several prompts used to generate background images of different product types, and the third prompt set comprises several prompts used to generate icons of different product types.

11. The apparatus according to claim 10, wherein the first element is a copywriting element, and the first generation module comprises:
a copywriting generation module, configured to generate, based on the first prompt set by using the pre-accessed text generation model, copywriting elements that respectively correspond to prompts in the first prompt set.

12. The apparatus according to claim 11, wherein the optimization module comprises:
a first optimization module, configured to acquire a model response of the content optimization model to each prompt in the second prompt set based on the second prompt set, wherein the model response is an optimized prompt that corresponds to each prompt in the second prompt set; and
a second optimization module, configured to acquire a model response of the content optimization model to each prompt in the third prompt set based on the third prompt set, wherein the model response is an optimized prompt that corresponds to each prompt in the third prompt set; optionally
wherein the second element comprises a background element and an icon element, and the second generation module further comprises:
a background generation module, configured to generate, by using the text-to-image generation model based on the optimized prompt that corresponds to each prompt in the second prompt set, a background element of the optimized prompt that corresponds to each prompt in the second prompt set; and
an icon generation module, configured to generate, by using the text-to-image generation model based on the optimized prompt that corresponds to each prompt in the third prompt set, an icon element of the optimized prompt that corresponds to each prompt in the third prompt set.

13. The apparatus according to any one of claims 8 to 12, wherein the material determining module comprises:
a type determining module, configured to determine a product type in the product information; and
a material acquisition module, configured to acquire, from the several first elements and the several second elements, image materials that conform to the product type, wherein the image materials that conform to the product type are the image materials that correspond to the product information; and/or wherein
the image synthesis module comprises:
a synthesis submodule, configured to perform, by using a pre-accessed image synthesis model, synthesis processing on the image template and the image materials that correspond to the product information, to obtain a synthesized image.

14. An electronic device, comprising a processor and a memory, wherein
the processor is connected to the memory; and
the memory is configured to store executable program code, wherein
the processor runs, by reading the executable program code stored in the memory, a program that corresponds to the executable program code, to perform the method according to any one of claims 1 to 7.

15. A computer-readable storage medium, storing a computer program, wherein when the computer program is executed by a processor, the method according to any one of claims 1 to 7 is performed.
